# EUROPEAN PATENT APPLICATION

(11) **EP 2 790 160 A1**
(43) Date of publication of application: **15.10.2014**
(21) Application number: 14159274.1
(22) Date of filing: 12.03.2014
(51) Int. Cl.: G07F 17/42, B41J 11/00, G07F 19/00, G07B 1/00, G07D 11/00

(54) **A banknote and voucher handling apparatus**

(30) Priority: 08.04.2013 GB 201306245
(71) Applicant: Innovative Technology Limited, Oldham, Lancashire OL1 4EQ (GB)
(72) Inventor: Robinson, Christopher, Oldham, Lancashire OL1 4EQ (GB)

(57) **Abstract**

A banknote and voucher handling apparatus (10) comprises an acceptor/dispenser unit (11) including a transport path (12) connected to an acceptor/dispenser unit first aperture (14), a banknote and voucher validator device (18), a printer (20), and a storage container (22). The printer is housed within a printer module (30) that is detachably connected to the acceptor/dispenser, and the acceptor/dispenser unit includes a second aperture (16) disposed at an opposite end of the transport path to the acceptor/dispenser first aperture (14), and the printer module includes printable media holding and storage means (32).

## Description

The present invention relates to an apparatus or device that accepts, validates and processes both banknotes and vouchers. In particular, the present invention relates to an apparatus that in addition to accepting, validating and processing banknotes and vouchers, can print vouchers and dispense them.

It should be noted that the term 'voucher' is intended to encompass tickets, coupons or any item on which information may be printed. In general, such items will have a coded value printed upon at least one face and this may take the form of a barcode or other such indicia.

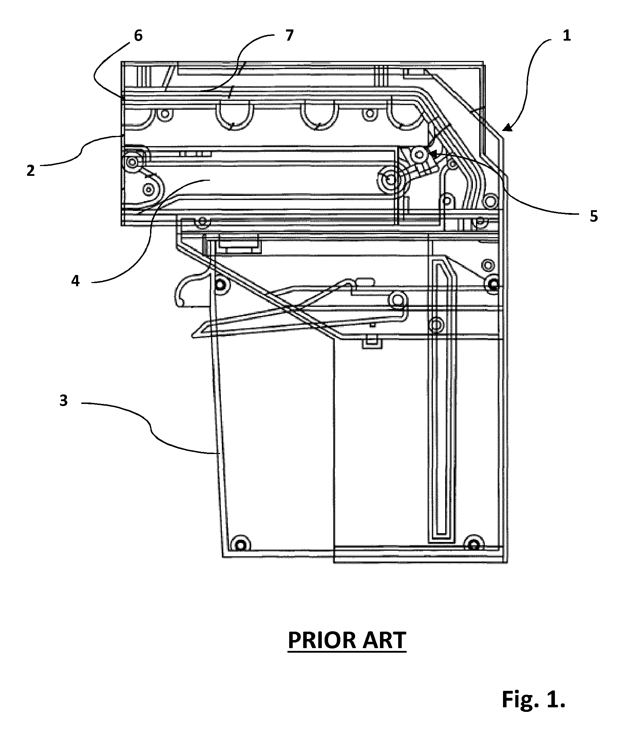

WO-A-03/034355 describes a conventional currency and voucher acceptor unit adapted for the gaming industry. As shown in Figure 1, the currency and voucher acceptor unit 1 comprises a housing enclosing a validator mechanism 2, a stacker 3, a printer 5, and a dispenser tray 4 for holding a fan-folded web of blank coupons. The web of coupons is fed from the tray 4 to a thermal printer 5 where a barcode or other such indicia is printed onto an individual coupon which is then separated from the web by a protrusion acting on web perforations. Once separated from the web, an individual coupon is transported via a transport path 7 to an output slot 6 from where it is dispensed.

A problem that arises with conventional acceptor units is that a fan-folded web of coupons occupies a relatively large volume of space for a small total number of coupons. Furthermore, fan-folded webs of coupons represent a costly form of printable media which can be prone to premature separation at a perforation site resulting in a break in the continuity of media being fed to the printer. When premature separation occurs it is necessary for an operator to intervene to rectify the problem before further coupon printing is possible.

According to an aspect of the present invention there is provided a banknote and voucher handling apparatus comprising: an acceptor/dispenser unit including a transport path connected to an acceptor/dispenser unit first aperture; a banknote and voucher validator device; a printer; and a storage container; characterised in that: the printer is housed within a printer module detachably connected to the acceptor/dispenser, the acceptor/dispenser unit includes a second aperture disposed at an opposite end of the transport path to the acceptor/dispenser first aperture, wherein the printer module includes: a voucher output aperture adapted to be communicatively aligned with the acceptor/dispenser unit second aperture, and a printable media holding and storage means.

Preferably, the printer module comprises a printable media input aperture in communication with the voucher output aperture, and the printable media holding and storage means comprises a seat arrangement adapted to receive a roll of printable voucher media.

The printer module seat arrangement comprises two non-coplanar axially rotatable rollers disposed between opposing guide walls.

Alternatively, the printable media holding and storage means comprises a media suspension frame and a removable axle to receive a spool. Typically, the spool carries a roll of paper and the paper passes from the roll over the media suspension frame.

Preferably, the printer module includes a media cutting mechanism disposed between the printable media input aperture and the voucher output aperture.

Advantageously, the printer module includes a voucher transport path between the media cutting mechanism and the voucher output aperture, and this transport path includes motor-driven conveyance wheels for transporting the voucher from the printer module to the acceptor/dispenser unit.

Preferably, the printer includes a feed mechanism adapted to receive and feed printable voucher media to the voucher transport path.

In addition, the printer module includes a communications connector that mates with a communications port in the acceptor/dispenser unit.

Advantageously, the printer module includes a plurality of lug-receiving slots for locating and removably mating with a corresponding plurality of lugs provided on the acceptor/dispenser unit.

In a preferred embodiment of the present invention the validator device included in the acceptor/dispenser unit is adapted to read banknotes and vouchers input via the first aperture and to read vouchers input via the second aperture. Advantageously, a holding position is provided in the transport path between the first and second apertures.

Preferably, the seat arrangement includes a printable media level detector that comprises an adjustable lever and an optical sensor. The adjustable lever is biased to obstruct an optical path of the optical sensor when there is no printable media present or when the level of printable media is below a predetermined level.

Advantageously, the apparatus of the present invention is separable into individual modular components comprising: the acceptor/dispenser unit; the storage container; and the printer module.

According to another aspect of the present invention there is provided a method comprising: providing a roll of printable voucher media; feeding printable voucher media to a printer module of a banknote and voucher handling apparatus; transporting the printable voucher media to a printer within the printer module; printing indicia on a portion of the printable voucher media; forming an individual voucher by cutting and separating the portion of the printable voucher media; transporting the individual voucher to a validator device and reading the indicia printed on said individual voucher; transporting the individual voucher to a holding position within the banknote and voucher handling apparatus; and transporting the individual voucher from the holding position and dispensing it from a banknote receiving aperture if the individual voucher is determined to be valid, otherwise transporting the individual voucher to a handling apparatus storage container.

The method further comprises: receiving a banknote or voucher through the banknote receiving aperture and transporting the banknote or voucher to the validator device for validation; transporting the banknote or voucher to the holding position; and transporting the banknote or voucher from the holding position and storing the banknote or voucher in the handling apparatus storage container if the banknote or voucher is determined to be valid, otherwise transporting the banknote or voucher back to the banknote receiving aperture for dispensing.

An embodiment of the present invention will now be described, by way of example only, with reference to the accompanying schematic drawings, in which:
Figure 1 shows a sectional view of a prior art currency and voucher acceptor unit;
Figure 2 shows a side elevation view of a banknote and voucher handling apparatus of the present invention;
Figure 3 is a detailed sectional view of a banknote and voucher handling apparatus of the present invention;
Figure 4 is a detailed sectional view of an alternative embodiment of a banknote and voucher handling apparatus of the present invention;
Figure 5 is a flow diagram of the operation of a banknote and voucher handling apparatus of the present invention; and
Figure 6 shows an exploded view of the individual modular components of an embodiment of a banknote and voucher handling apparatus of the present invention.

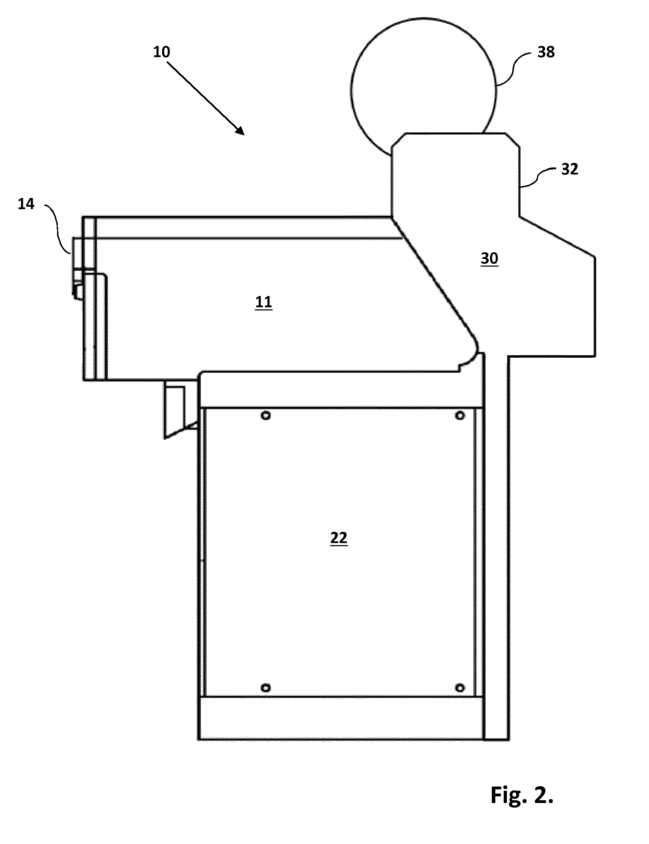

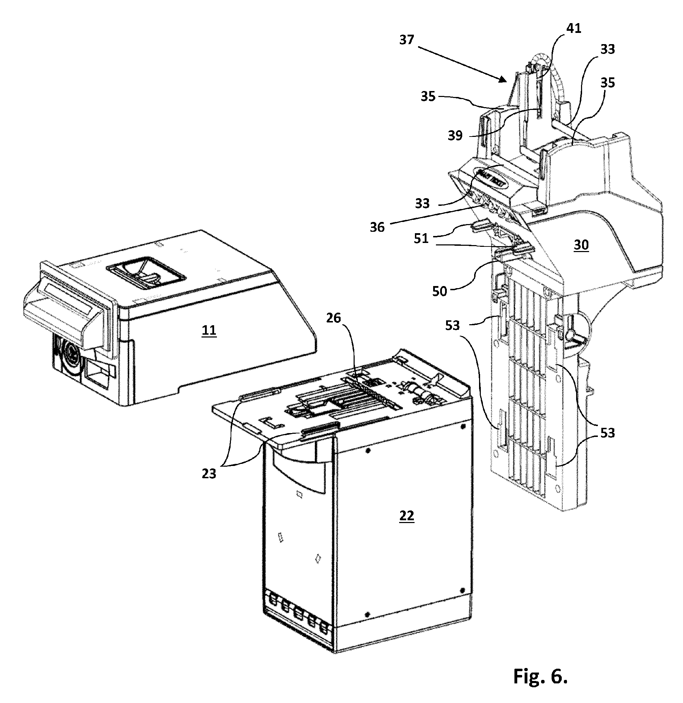

As shown in Figures 2 to 4, and in Figure 6, the banknote and voucher handling apparatus 10 of the present invention comprises three main modular components: an acceptor/dispenser unit 11, a storage container 22 disposed below the acceptor/dispenser unit 11, and a printer module 30 attached to the rear of both the acceptor/dispenser unit 11 and the storage container 22.

The acceptor/dispenser unit 11 includes a transport path 12 interconnecting a first aperture 14 and a second aperture 16. The transport path 12 extends into the storage container 22 to form a holding section 13.

A validator device 18 disposed within the acceptor/dispenser unit 11 is positioned above the holding section 13. It is envisaged that the validator device 18 is any known device suitable for the purpose of reading and validating a banknote or voucher. The validator device 18 may utilise any known sensor arrangement, such as one incorporating magnetic sensors or optical sensors, or any known recognition means.

In operation, the acceptor/dispenser unit 11 is capable of receiving and authenticating both currency banknotes and printed vouchers or coupons etc. Banknotes and vouchers received via input through the first aperture 14 are routed passed the validator device 18 to the holding section 13 through operation of a diverter gate 17.

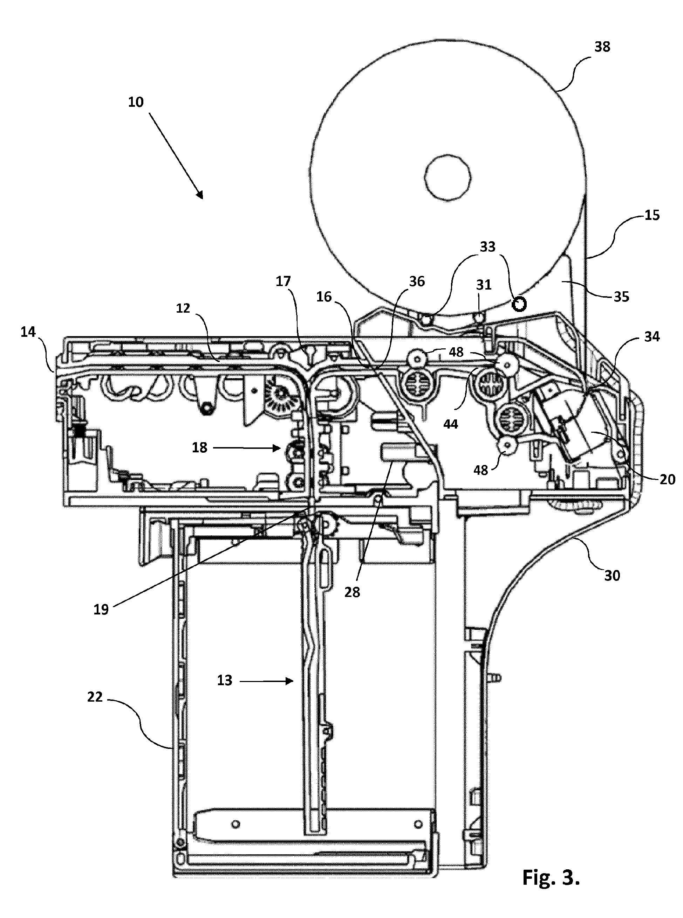

With reference to Figures 3, 4 and 6, the apparatus of the present invention includes a printer module 30. The printer module 30 is removably attached to the rear of both the acceptor/dispenser unit 11 and the storage container 22. Locking engagement of the printer module 30 is achieved via a plurality of lugs [not shown] positioned on the rear plate of the storage container 22 mating with corresponding lug-receiving slots 53 positioned on a lower portion of the printer module 30. The acceptor/dispenser unit 11 is removably attached to an upper surface of the storage container 22 via guide and locking means 23 that mate with corresponding slots [not shown] positioned on the underside of the acceptor/dispenser unit 11.

The printer module 30 also includes locating pegs 51 that are inserted into corresponding female slots [not shown] located at the rear of the acceptor/dispenser unit 11. In addition, positioned between and below the locating pegs 51, is a male communications connector 50 which mates with a corresponding female communications port 28 located at the rear of the acceptor/dispenser unit 11. This provides data communication between the host gaming machine [not shown], the printer module 30 and the acceptor/dispenser unit 11.

The upper section of the printer module 30 forms a printable media holding and storing means 32. The holding and storing means 32 comprises a pair of opposing guide walls 35, a pair of rollers 33, a support bar 31, and a media level detector 37. Each roller 33 is rotatable about its longitudinal axis and, as will be noted from the Figures, the longitudinal axes of rollers 33 are not coplanar. This arrangement of the pair of rollers 33 and the support bar 31 forms a seat for supportively receiving a roll of printable voucher media 38 that allows the roll to freely rotate. In a preferred embodiment the media roll is a roll of paper 15. However, it should be understood that any printable media may be used.

The media level detector 37 comprises a lever arm 39 and an optical sensor 41. The lever arm 39 is spring-biased to a position in which it protrudes inwardly towards the opposing guide wall 35. When a media roll 38 is in place within the holding and storing means 32, the lever arm 39 is urged rearwards in a direction away from the opposite wall so as to obstruct the light path of the optical sensor 41. The vertical position of the lever arm 38 is adjustable so that it can be set to trigger at various media roll 38 diameters. In operation, when the diameter of the media roll 38 falls below the height set for the lever arm 39, the lever arm 39 will resile outwards to its biased position such that the light path of the optical sensor 41 is no longer obstructed and a signal is generated which is detected as media level low/spent warning.

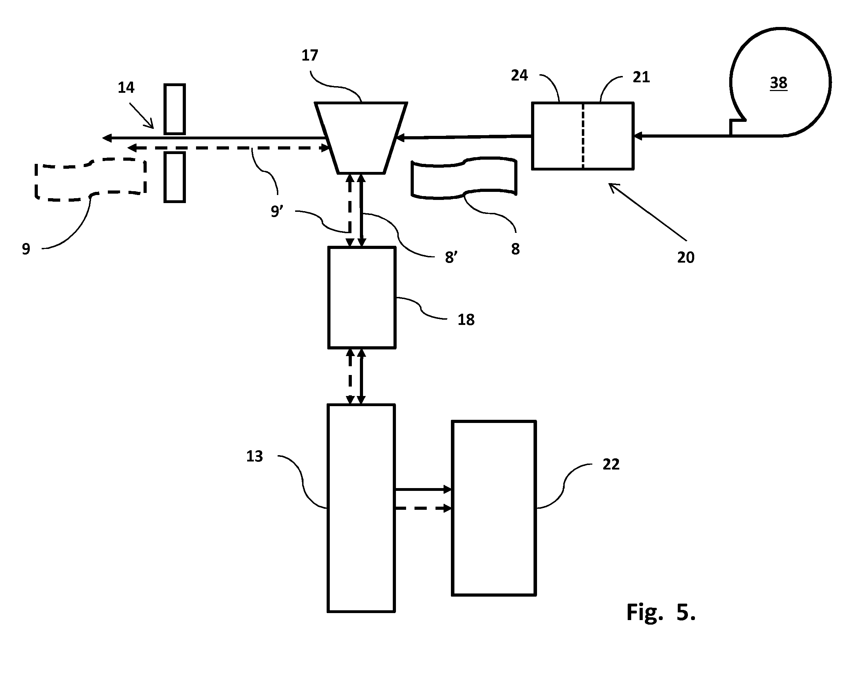

In operation, and with reference to Figures 3 and 5, paper 15 is fed from the media roll 38 into printable media input aperture 34 where it engages with a printer unit 20. The printer unit 20 includes a paper feed mechanism [not shown], a thermal print head 21 and a media cutting mechanism 24. The paper feed mechanism feeds the paper 15 into a voucher transport path 44 that terminates at a voucher output aperture 36. The voucher output aperture 36 corresponds and aligns with the acceptor/dispenser unit second aperture 16.

The thermal print head 21 is driven by a controller [not shown] to print indicia such as a barcode, or the like, onto the paper 15 as it is fed through the printer unit 20. When a print procedure is complete, the cutting mechanism 24 produces the required voucher 8 by guillotining the paper train at a desired position. The printed voucher 8 is then transported along the voucher transport path 44 by conveyance wheels 48 to be fed through the voucher output aperture 36 into the acceptor/dispenser unit 11. The conveyance wheels are powered by an integral motor [not shown] housed within the printer module.

The printed voucher 8 enters the acceptor/dispenser unit 11 through acceptor/dispenser unit second aperture 16 to join transport path 12. Actuation of the diverter gate 17 diverts the voucher downwards 8' passed the validator device 18 which scans the voucher for the printed indicia. After the voucher has been scanned, it is transported to the holding section 13 to await the result of the scanning operation.

In the event that a central processor unit [not shown] determines that the correct indicia has been printed on the voucher 8, the voucher 8 is then transported upwards 8' and diverted by operation of the diverter gate 17 towards the acceptor/dispenser unit first aperture 14. From here the voucher 8 is dispensed to a user of the gaming machine, or other such host machine, in which the banknote and voucher handling apparatus 10 has been installed. Otherwise, if the indicia are determined to be incorrect, the voucher 8 is deposited into the storage container 22 and not dispensed to the user.

As shown in Figure 5, a received banknote or voucher 9 traverses path 9' [shown in broken line]. Here, a user inserts a banknote or voucher into the acceptor/dispenser unit first aperture 14 and this is fed via the diverter gate 17 downwards to the validator device 18 where it is scanned for authenticity. The scanned banknote or voucher 9 then passes to the holding section 13 pending a storage operation or rejection operation. If the banknote or voucher 9 is determined to be authentic it is stored in the storage container 22. Alternatively, if the banknote or voucher 9 is determined to be counterfeit or non-acceptable, it is returned to the user along the reverse of path 9' via the diverter gate 17 to be dispensed from the first aperture 14.

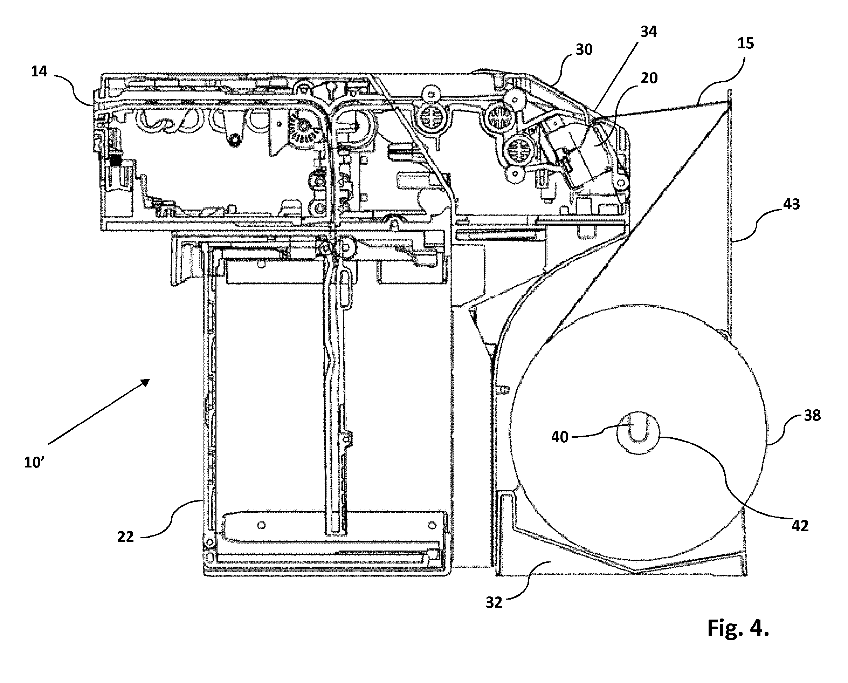

An alternative embodiment of a banknote and voucher handling apparatus 10' is shown in Figure 4. Here, the printer module 30 includes printable media holding and storage means 32 that is positioned behind the storage container 22 such that the vertical profile of the handling apparatus is reduced as compared to the embodiment depicted in Figures 2 and 3. Advantageously, this version of the banknote and voucher handling apparatus 10' is particularly suited for use with host machines in which the internal vertical accommodation capacity is limited. Other than the positioning of the paper roll, the printer module 30 functions in the same manner as described above in relation to the embodiment shown in Figures 2 and 3.

The banknote and voucher handling apparatus 10' shown in Figure 4 includes a spool 42 carrying a roll of printable voucher media 38 rotatably supported by an axle 40. In order that paper 15 from the roll 38 is correctly fed into the printer module 30, and to ensure that the paper tension is maintained at the correct operational level, a suspension frame 43 is provided that extends in a substantially vertical direction from the printable media holding and storage means 32 to support the paper at a position above the printable media input aperture 34 but not above the vertical profile of the banknote and voucher handling apparatus 10'. Furthermore, the suspension frame 43 provides a means to prevent the weight of the roll 38 being transferred to the paper 15 as it is fed into the printable media input aperture 34.

The interconnectable modular relationship of the apparatus of the present invention will now be described with particular reference to Figure 6. As shown, the banknote and voucher handling apparatus is separable into individual components. The main components are the acceptor/dispenser unit 10, the storage container 22, and the printer module 30.

The acceptor/dispenser unit 11 includes a second aperture 16 and a third aperture 19 [not shown in Figure 6]. The printer module 30 includes a voucher output aperture 36, and the storage container 22 includes an input/output aperture 26.

When combined, and advantageously assisted by guide and locking means 23, locating pegs 50, and lug receiving slots 53, the second aperture 16 aligns with the voucher output aperture 36, and the third aperture 19 of the acceptor/dispenser unit aligns with the input/output aperture 26 of the storage container 22. In this way, even though each constituent component is independent, thus allowing for easy maintenance and replacement, when combined a continuous transport path is provided for banknotes and vouchers.

## Claims

1. A banknote and voucher handling apparatus (10) comprising:
an acceptor/dispenser unit (11) including a transport path (12) connected to an acceptor/dispenser unit first aperture (14);
a banknote and voucher validator device (18);
a printer (20); and
a storage container (22);
**characterised in that**:
the printer (20) is housed within a printer module (30) detachably connected to the acceptor/dispenser unit, the acceptor/dispenser unit includes a second aperture (16) disposed at an opposite end of the transport path (12) to the acceptor/dispenser first aperture (14), wherein the printer module (30) includes: a voucher output aperture (36) adapted to be communicatively aligned with the acceptor/dispenser unit second aperture (16), and a printable media holding and storage means (32).

2. A banknote and voucher handling apparatus as claimed in claim 1, wherein the printer module 930) comprises a printable media input aperture 934) in communication with the voucher output aperture (36).

3. A banknote and voucher handling apparatus as claimed in claim 1 or 2, wherein the printable media holding and storage means (32) comprises a seat arrangement adapted to receive a roll of printable voucher media (38).

4. A banknote and voucher handling apparatus as claimed in claim 3, wherein the seat arrangement comprises two non-coplanar axially rotatable rollers (33) disposed between opposing guide walls (35).

5. A banknote and voucher handling apparatus as claimed in claim 1 or 2, wherein the printable media holding and storage means (32) comprises a media suspension frame (43) and a removable axle (40) adapted to receive a spool (42).

6. A banknote and voucher handling apparatus as claimed in claim 5, wherein the spool (42) carries a roll of paper (38) from which paper passes over the media suspension frame (43).

7. A banknote and voucher handling apparatus as claimed in any preceding claim, wherein the printer module (30) includes a media cutting mechanism (24).

8. A banknote and voucher handling apparatus as claimed in claim 7, wherein the media cutting mechanism (24) is disposed between the printable media input aperture (34) and the voucher output aperture (36).

9. A banknote and voucher handling apparatus as claimed in claims 7 or 8, wherein the printer module (30) includes a voucher transport path (44) between the media cutting mechanism (24) and the voucher output aperture (36), the voucher transport path including motor-driven conveyance wheels (48).

10. A banknote and voucher handling apparatus as claimed in claim 9, wherein the printer (20) includes a feed mechanism (46) adapted to receive and feed printable voucher media to the voucher transport path (44).

11. A banknote and voucher handling apparatus as claimed in any preceding claim, wherein the printer module (30) includes a communications connector (50) adapted to mate with a corresponding communications port (28) disposed proximal to the acceptor/dispenser unit second aperture (16).

12. A banknote and voucher handling apparatus as claimed in any preceding claim, wherein the printer module (30) includes a plurality of lug-receiving slots (53) for locating and removably mating with a corresponding plurality of lugs (52) provided on the acceptor/dispenser unit.

13. A banknote and voucher handling apparatus as claimed in any preceding claim, wherein the validator device (18) is adapted to read banknotes and vouchers (9) input via the acceptor/dispenser unit first aperture (14) and to read vouchers (8) input via the acceptor/dispenser unit second aperture (16), and wherein the transport path includes a holding position (13) between said first and second apertures.

14. A banknote and voucher handling apparatus as claimed in claim 3 or 4, wherein the seat arrangement includes a printable media level detector (37).

15. A banknote and voucher handling apparatus as claimed in claim 14, wherein the printable media level detector (37) comprises an adjustable lever (39) and an optical sensor (41), wherein the adjustable lever (39) is biased to obstruct an optical path of the optical sensor (41) when there is no printable media present or when the level of printable media is below a predetermined level.

16. A banknote and voucher handling apparatus as claimed in any preceding claim, wherein the apparatus is separable into individual modular components comprising: the acceptor/dispenser unit (11); the storage container (22); and the printer module (30).

17. A method comprising:
providing a roll of printable voucher media (38);
feeding printable voucher media to a printer module (30) of a banknote and voucher handling apparatus (10);
transporting the printable voucher media to a printer (20) within the printer module;
printing indicia on a portion of the printable voucher media;
forming an individual voucher (8) by cutting and separating the portion of the printable voucher media;
transporting the individual voucher (8) to a validator device (18) and reading the indicia printed on said individual voucher;
transporting the individual voucher (8) to a holding position (13) within the banknote and voucher handling apparatus; and
transporting the individual voucher (8) from the holding position and dispensing it from a banknote receiving aperture (14) if the individual voucher is determined to be valid, otherwise transporting the individual voucher to a handling apparatus storage container (22).

18. A method as claimed in claim 17, wherein the method further comprises:
receiving a banknote or voucher (9) through the banknote receiving aperture (14) and transporting the banknote or voucher (9) to the validator device for validation;
transporting the banknote or voucher to the holding position; and
transporting the banknote or voucher from the holding position and storing the banknote or voucher in the handling apparatus storage container if the banknote or voucher is determined to be valid, otherwise transporting the banknote or voucher back to the banknote receiving aperture (14) for dispensing.
